# FASCICULE DE BREVET EUROPEEN

(11) **EP 0 412 875 B1**
(45) Date de publication et mention de la délivrance du brevet: **17.04.1996**
(21) Numéro de dépôt: 90402191.2
(22) Date de dépôt: 31.07.1990
(51) Int. Cl.: H05B 6/12

(54) **Dispositif de mesure de température pour appareil de cuisson à induction et appareil comportant un tel dispositif**
Temperaturmessvorrichtung für Induktionskochgerät und Gerät mit einer solchen Vorrichtung
Temperature measuring device for induction cooking apparatus and apparatus equipped with such a device

(30) Priorité: 04.08.1989 FR 8910527
(43) Date de publication de la demande: 13.02.1991
(73) Titulaire: COMPAGNIE EUROPEENNE POUR L'EQUIPEMENT MENAGER "CEPEM", F-45140 St Jean-de-la-Ruelle (FR)
(72) Inventeur: Gouardo, Didier, F-92402 Courbevoie Cédex (FR); Boyer, Serge, F-92402 Courbevoie Cédex (FR); Pitot, Pierre, F-92402 Courbevoie Cédex (FR)
(74) Mandataire: Benoit, Monique

(56) Documents cités:
- EP-A- 0 082 768
- FR-A- 1 396 923
- FR-A- 2 260 249
- GB-A- 2 095 834
- US-A- 3 786 220
- US-A- 4 319 109

## Description

L'invention se rapporte principalement à un dispositif de mesure de température pour appareil de cuisson à induction et un appareil comportant un tel dispositif.

Il est connu des dispositifs de mesure de la température de récipients chauffés par induction par exemple sur une table de cuisson. Une telle table de cuisson comporte une plaque plane par exemple en vitrocéramique sur laquelle est susceptible d'être posée une casserole. Il s'agit de mesurer la température du contenu de la casserole par exemple en vue d'un asservissement. Le dispositif de mesure doit tenir compte du fait que le fond des casseroles n'est pas nécessairement parfaitement plan et que l'on peut utiliser des casseroles de divers diamètres. Avec un fond de casserole concave ou convexe, les capteurs ponctuels placés au centre risquent de ne pas être en contact avec la casserole et donc de délivrer des mesures fausses.

Pour résoudre ce problème, le document US-A 3.786. 220 décrit un dispositif de mesure de température pour un appareil de cuisson à induction comportant un support pour le récipient et un inducteur placé sous ce support, le dispositif étant du type comportant un capteur de température fixé à un diaphragme en caoutchouc siliconé. L'ensemble constitué par le capteur et le diaphragme est placé dans une ouverture pratiquée dans le support sous le récipient, et le diaphragme a pour fonction d'obturer l'ouverture et de permettre au capteur d'être toujours en contact avec le fond du récipient, même si ce dernier est léger ou présente des déformations.

De plus, dans le cas d'une table de cuisson à induction, même avec une casserole à fond plat, l'échauffement maximal est obtenu à un diamètre correspondant à la moitié du diamètre de l'inducteur. A cet endroit, la température du fond de la casserole est supérieure à la température de son contenu, par exemple de l'huile, que l'on veut pouvoir mesurer. Par contre, au centre et au bord de la casserole, la température est inférieure. Elle est proche de celle du contenu de la casserole.

Les capteurs ponctuels placés sur la périphérie risquent de ne pas pouvoir mesurer la température des casseroles de faible diamètre.

Pour résoudre ce problème, les tables de cuisson induction de faible puissance ont été équipées avec des plaques d'aluminium mises en contact thermique avec les capteurs de température. Cette plaque d'aluminium bon conducteur thermique permet de moyenner la température sur une plus grande surface.

La présente invention repose sur la découverte du fait que les mesures de température avec le dispositif de type connu comportant une plaque d'aluminium étaient faussées par l'échauffement de ladite plaque d'aluminium par le courant induit par l'inducteur. Cela est particulièrement grave dans le cas où la mesure de la température sert à l'asservissement de celle-ci. En effet, les courants d'induction vont échauffer la plaque d'aluminium et fausser la mesure de la température qui à son tour va réguler la puissance de courant d'induction. Il en résulte un comportement complètement erratique.

De plus, l'utilisation des plaques d'aluminium est parfaitement impossible dans le cas de plaques de cuisson à induction de puissance normale ou de puissance élevée. En effet, à puissance élevée l'échauffement de la plaque d'aluminium risque d'endommager ou de détruire les capteurs de température et l'inducteur. De plus, en cas de puissance élevée, à supposer que le capteur soit encore en état de fonctionner, la température mesurée est principalement fonction des courants induits dans la plaquette d'aluminium et n'est que faiblement influencée par la température de cuisson.

Le document FR-A-2.260.249 enseigne que, pour réduire les courants induits dans une pellicule électriquement conductrice utilisée, dans un appareil de chauffage à induction, pour réduire ou empêcher une liaison électrostatique entre le récipient et l'inducteur, il est nécessaire de donner à cette pellicule, une configuration telle qu'elle ne forme pas une boucle fermée.

La présente invention a pour but de mesurer avec précision la température d'un récipient ou de son contenu chauffé par une table de cuisson par induction et cela quelle que soit la forme de ce récipient.

Pour cela, le dispositif selon la présente invention comporte un détecteur de température connecté thermiquement à un conducteur de chaleur comportant des moyens permettant de diminuer la puissance électromagnétique absorbée par le conducteur de chaleur, en diminuant l'intensité de courant induit. Pour cela, on augmente la résistance circonférentielle électrique tout en essayant de perturber le moins possible la conduction thermique radiale.

L'invention a principalement pour objet un dispositif de mesure tel que défini dans les revendications 1 à 12. L'invention a aussi pour objet une table de cuisson telle que définie dans les revendications 13 et 14.

Un procédé de réalisation du dispositif de mesure de température selon l'invention d'un récipient ou d'un produit chauffé par un appareil de cuisson à induction, comporte alors les étapes suivantes :
- détermination des courants qui seraient induits par un inducteur dans un conducteur de chaleur placé contre cet inducteur en fonction de la géométrie et des matériaux employés ;
- réalisation du conducteur de chaleur de géométrie et/ou avec des matériaux minimisant son chauffage par l'inducteur tout en optimisant la conduction thermique ;
- mise en contact thermique du conducteur de chaleur avec un capteur de température placé à proximité de l'inducteur .

L'invention sera mieux comprise au moyen de la description ci-après et des figures annexées données comme des exemples non limitatifs parmi lesquels :
- les figures 1 à 3 sont des schémas illustrant les inconvénients de l'art antérieur ;
- la figure 4 est un schéma d'un premier exemple de réalisation du dispositif selon la présente invention ;
- la figure 5 est un deuxième exemple de réalisation du dispositif selon la présente invention ;
- la figure 6 est un troisième exemple de réalisation du dispositif selon la présente invention ;
- la figure 7 est un quatrième exemple de réalisation du dispositif selon la présente invention ;
- la figure 8 est un cinquième exemple de réalisation du dispositif selon la présente invention ;
- la figure 9 est un sixième exemple de réalisation du dispositif selon la présente invention ;
- la figure 10 est un septième exemple de réalisation du dispositif selon la présente invention ;
- la figure 11 est un schéma d'une table de cuisson selon la présente invention ;
- la figure 12 est un schéma d'un dispositif de contrôle utilisé dans le cadre de l'invention.

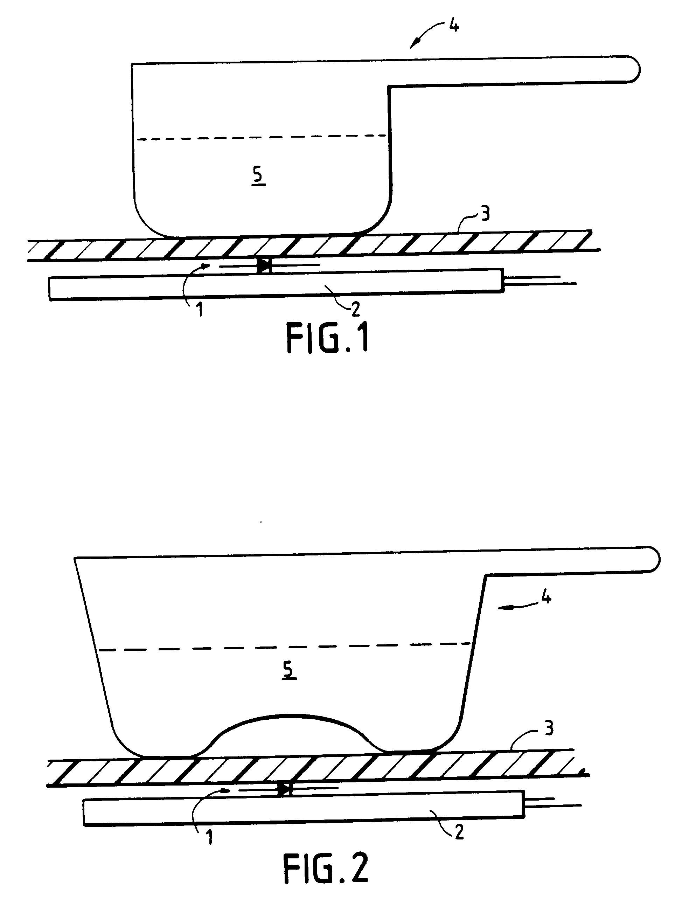

Sur les figures 1 à 11 on a utilisé les mêmes références pour désigner les mêmes éléments.

Sur la figure 1, on peut voir une table de cuisson à induction de type connu. La table de cuisson comporte un inducteur 2, un capteur de température 1, un support 3 de casserole 4, par exemple une plaque en vitrocéramique.

L'inducteur 2 parcouru par un courant est destiné à générer dans la casserole 4 des courants qui par effet Joule provoqueront une élévation de la température du contenu 5 de la casserole 4. Le capteur de température 1 est destiné à mesurer la température du contenu 5 de la casserole 4, de la casserole 4 ou de la plaque vitrocéramique 3. Le capteur de température 1 permet d'asservir la température à une valeur de consigne fixée par les organes de commande ou à une séquence de chauffage donnée ou afficher un signal d'alarme destiné à éviter tout contact de la main avec une plaque encore chaude. L'asservissement de la température permet d'obtenir la cuisson désirée et empêcher la détérioration de la casserole.

En présence d'une casserole 4 dont le fond est plan, le capteur 1 placé au centre de l'inducteur 2 peut délivrer un signal caractéristique de la température du contenu 5 de la casserole 4. Toutefois, fréquemment, comme on peut par exemple le voir sur la figure 2, les casseroles ont un fond concave. Dans ce cas il est probable que le capteur de température 1 se trouvera sur une partie de la plaque vitrocéramique 3 qui n'est pas en contact avec le fond de la casserole 4. Dans un tel cas le signal délivré par le capteur 1 ne sera plus caractéristique de la température du contenu 5 de la casserole 4. En effet, la température du capteur 1 risque d'être sensiblement inférieure à la température du contenu 5 de la casserole 4.

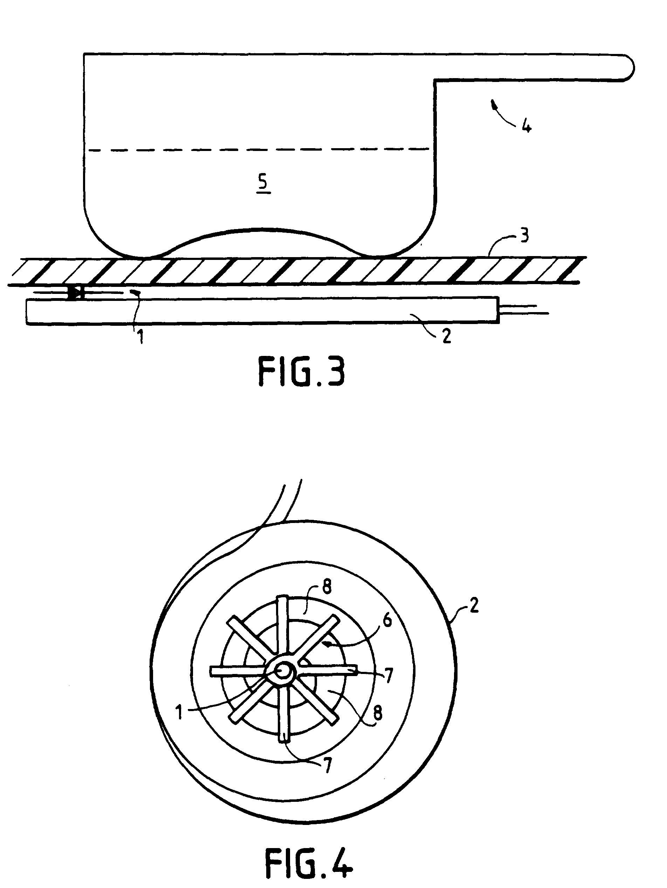

Sur la figure 3, on peut voir le problème rencontré avec un détecteur de température placé à la périphérie de l'inducteur 2. Un tel détecteur arrive à bien mesurer la température du contenu 5 de la casserole 4 de grand diamètre, même si son fond est concave. Toutefois, dans le cas de casseroles de petit diamètre, le capteur 1 est complètement inefficace.

Sur la figure 4, on peut voir un premier exemple de réalisation d'un dispositif de mesure de température selon la présente invention. Sur l'inducteur 2 on place le capteur de température 1. Le capteur de température 1 est avantageusement une diode à coefficient de température négatif (CTN). Toutefois l'utilisation d'autres capteurs de température notamment des capteurs à coefficient de température positif, des thermocouples, ou des thermorésistances ne sort pas du cadre de la présente invention. Un conducteur thermique 6 est mis en contact thermique avec le capteur 1. Il est possible d'assurer l'isolation électrique du conducteur thermique par rapport à l'inducteur 1 pour garantir la sécurité des utilisateurs. Cette isolation électrique sera constituée par exemple par un film diélectrique mince ou une graisse conductrice de chaleur pour ne pas perturber la conduction thermique. Il est important de minimiser l'échauffement du conducteur thermique 6 par rayonnement électromagnétique de l'inducteur 2. Il est avantageux d'utiliser des pièces métalliques par exemple des plaques d'aluminium, de laiton, de cuivre ou d'alliage de cuivre. On obtient une diminution de la chaleur induite dans l'inducteur 2 par le choix du matériau et surtout de la géométrie du conducteur thermique 6. Dans l'exemple illustré sur la figure 4, l'inducteur 2 induit des courants circonférentiels. Dans un tel cas on augmente la résistance électrique circonférentielle du conducteur 6 de façon à diminuer l'intensité des courants induits. Dans l'exemple illustré sur la figure 4, l'augmentation de la résistance est provoquée par des découpes radiales 8. Dans l'exemple illustré sur la figure 4, le conducteur thermique 6 a une forme d'étoiles comportant des languettes radiales 7 assurant la conduction thermique. Dans l'exemple illustré sur la figure 4, le conducteur thermique 6 a une épaisseur de quelques dixièmes de millimètres. Toutefois, il est possible pour limiter l'induction de courant dans le conducteur de chaleur 6 d'utiliser des feuilles d'isolant intercalées à l'intérieur, sur au moins une partie, de plaques métalliques. Ainsi, il est possible d'utiliser des plaques métalliques dont l'épaisseur totale est plus grande assurant une meilleure conduction tout en évitant l'induction de courant dans l'épaisseur du conducteur thermique 6. On peut aussi utiliser des tresses conductrices pour réaliser le conducteur de chaleur.

Pour le bon fonctionnement du dispositif de mesure de température selon la présente invention il est impératif qu'au moins une partie du conducteur thermique soit recouverte par le récipient dont on veut mesurer la température. Avantageusement, le diamètre du conducteur thermique est du même ordre que celui de la casserole du plus petit diamètre que l'on veut pouvoir utiliser. Toutefois, si une partie du conducteur thermique 6 n'est pas recouverte par la casserole, dans la mesure où c'est la partie la plus chaude qui va déterminer la température à laqueUe est porté le capteur 1, la mesure n'est que faiblement perturbée.

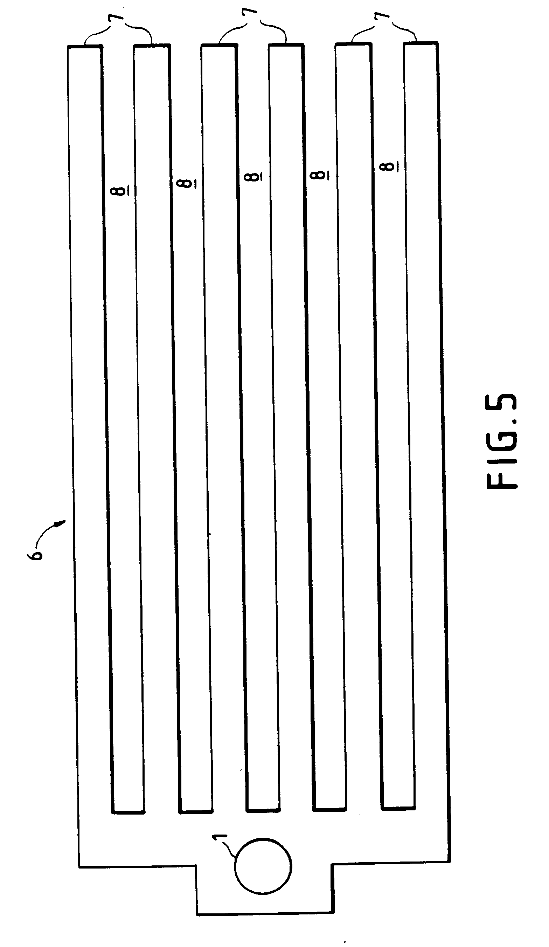

Sur la figure 5, on peut voir l'exemple de réalisation préféré du dispositif selon la présente invention. Dans le dispositif de la figure 5 le capteur de température 1 est placé sur un élargissement de la base du conducteur thermique 6. Sur cette base partent six languettes 7 parallèles séparées par cinq découpes 8. Dans l'exemple de réalisation préféré la base a une épaisseur de 4 mm, son élargissement a une épaisseur de 3,5 mm et chaque languette 7 et découpe 8 a une largeur de 2 mm. Le capteur de température 1 est placé par exemple à proximité du bord de l'inducteur 2. Pour des réalisations dans lesquelles on désire placer le capteur 1 au centre de l'inducteur 2 (non représenté sur la figure 5) il peut s'avérer avantageux d'utiliser un conducteur thermique 6 comportant en plus six autres languettes 7 placées symétriquement par rapport au capteur de température 1.

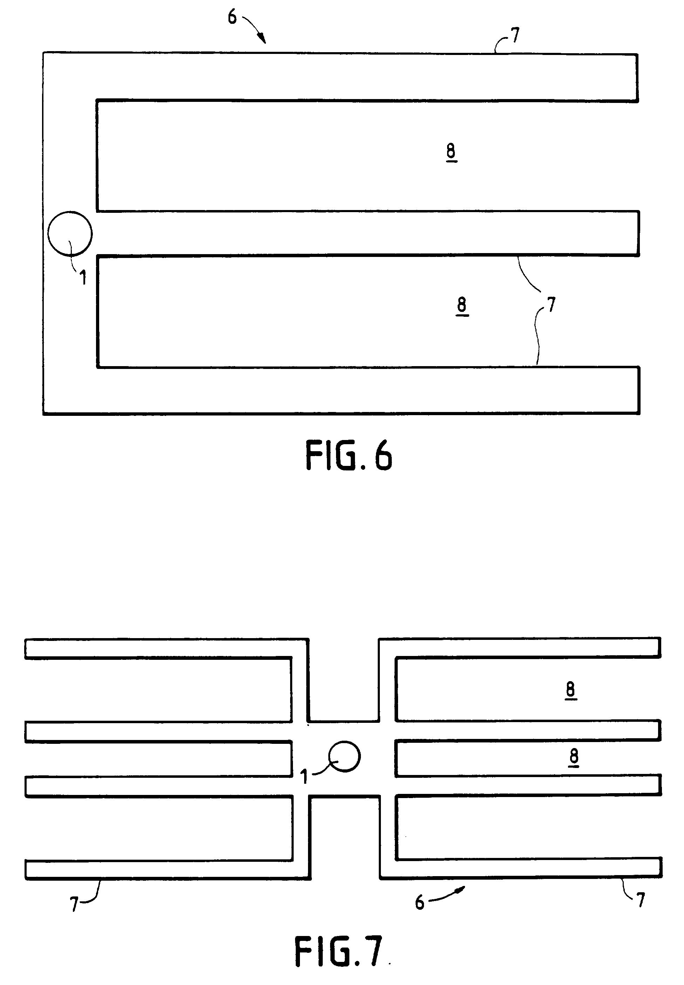

Sur la figure 6, on peut voir une variante de réalisation du dispositif selon la présente invention comportant trois languettes 7 séparées par des découpes 8. Le capteur de température 1 se trouve sur la base commune des trois languettes.

Sur la figure 7, on peut voir un exemple de réalisation du dispositif selon la présente invention comportant deux ensembles de quatre languettes 7 placés symétriquement par rapport au capteur de température 1. Cet ensemble est destiné à être placé au centre de l'inducteur 2 (non représenté sur la figure 7).

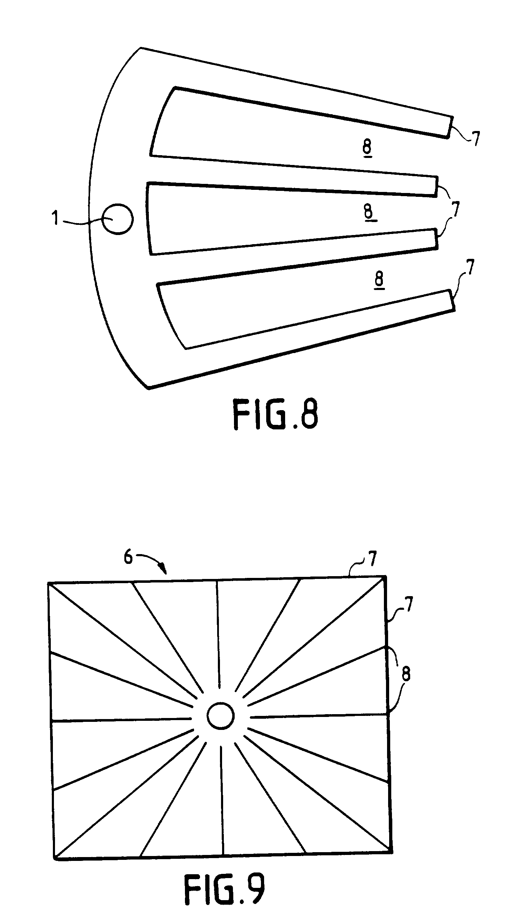

Sur la figure 8, on peut voir un exemple de réalisation du dispositif selon la présente invention comportant quatre languettes 7 partant d'une base circulaire. Le capteur de température 1 est placé sur la base circulaire. La base circulaire est placée soit sur le bord de l'inducteur 2 (non représenté sur la figure) soit de façon concentrique à ce bord.

Sur la figure 9, on peut voir un exemple de réalisation du dispositif selon la présente invention dans laquelle les découpes 8 ont la forme de rainures de faible épaisseur. Dans l'exemple illustré sur la figure 9, le conducteur thermique 6 est une simple plaque dans laquelle on a pratiqué des rainures radiales. Au centre de la plaque est placé le capteur de température 1. Il est bien entendu possible d'utiliser des plaques circulaires sans sortir du cadre de la présente invention.

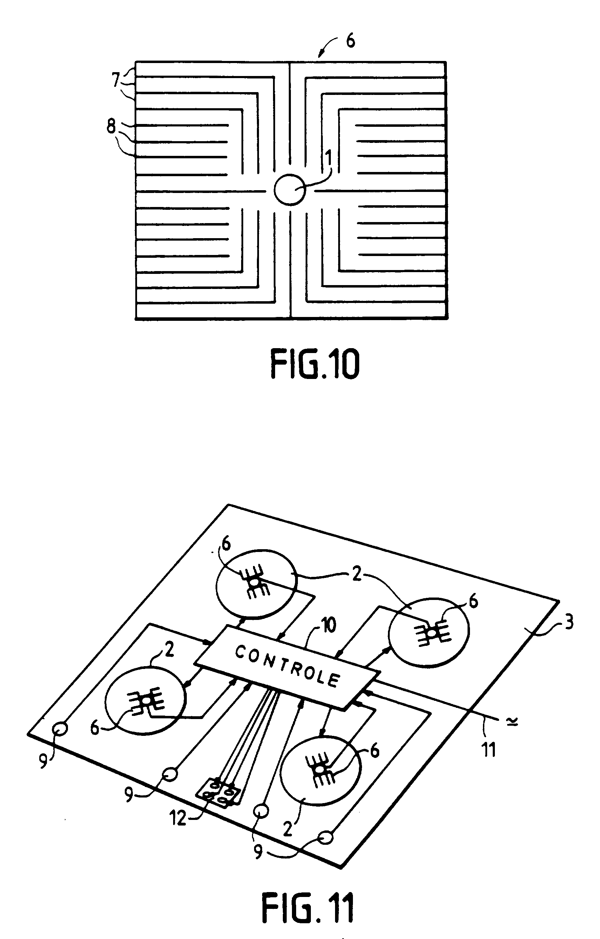

Sur la figure 10, on peut voir un exemple de réalisation des plaques comportant des rainures 8 formant des languettes 7 de largeur constante typiquement 2 mm. Le capteur de température 1 est placé au centre du conducteur thermique 6.

Il est bien entendu que l'utilisation d'une pluralité de conducteurs thermiques connectés thermiquement à un même capteur de température ne sort pas du cadre de la présente invention. De même, on peut utiliser une languette unique qui de par sa forme allongée minimisera l'échauffement par les courants induits.

Il est bien entendu que l'on peut utiliser d'autres moyens que les découpes 8 pour diminuer l'énergie absorbée par le conducteur de chaleur 6. Par exemple on peut varier localement ou globalement la résistivité du conducteur de chaleur 6. Par exemple, on utilise des conducteurs de chaleur de très faible résistance, par exemple en cuivre ou en argent, de façon à diminuer les pertes par effet Joule. Dans un autre exemple de réalisation, on augmente localement la résistivité du conducteur de chaleur 6 de façon à diminuer l'intensité de courant induit.

Sur la figure 11, on peut voir une table de cuisson à induction selon la présente invention. Il est bien entendu que la réalisation de cuisinières comportant en outre un four ne sortent pas du cadre de la présente invention. Dans l'exemple de réalisation illustré sur la figure 11, la table à induction comporte quatre inducteurs 2. Il est bien entendu que les tables de cuisson comportant un nombre d'inducteurs 2 différent ne sortent pas du cadre de la présente invention. Les inducteurs 2 sont équipés de dispositifs de mesure de température selon la présente invention comportant des conducteurs de chaleur 6. Avantageusement, la table à induction selon la présente invention comporte un dispositif de contrôle 10. Le dispositif de contrôle 10 est relié au secteur d'alimentation 11, aux dispositifs de commande 9, aux dispositifs de mesure de température, aux inducteurs 2 et, avantageusement à un dispositif 12 d'affichage de présence de température résiduelle de la plaque vitrocéramique 3.

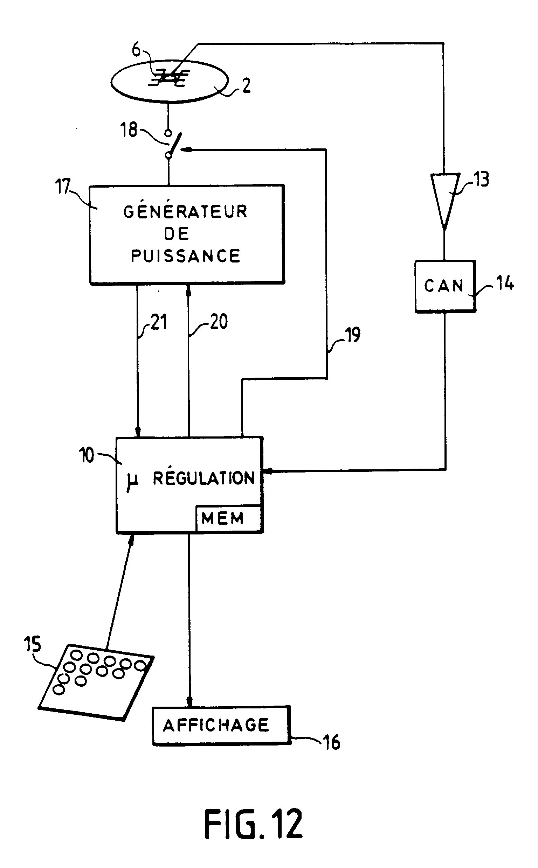

Un exemple de dispositif de contrôle de type connu est illustré sur la figure 12. Le dispositif de contrôle 10 comporte un microprocesseur de régulation associé à une mémoire permanente contenant les divers programmes de fonctionnement. Un clavier 15 permet de donner des consignes de la cuisson désirée. Avantageusement, un afficheur 16 connecté au dispositif de contrôle 10 permet de visualiser le choix que l'on est en train d'effectuer, pour faciliter la commande et/ou afficher des informations relatives à la cuisson (temps restant, température, type de programme choisi, puissance instantanée, énergie consommée. . . ) .

Le dispositif de contrôle 10 est connecté à un générateur de puissance 17 par une ligne 20 transmettant les consignes de puissance. Le générateur de puissance 17 est relié par une ligne 21 au dispositif de contrôle 10 par laquelle il lui communique les mesures de courant et de tension au niveau des inducteurs 2. Le générateur de puissance 17 est relié à l'inducteur 2 par un relais 18 commandé par une ligne 19 provenant du dispositif de contrôle 10.

Le dispositif de mesure de température indique au dispositif de contrôle 10 la température du contenu d'un récipient posé sur l'inducteur 2. Dans l'exemple illustré le dispositif de mesure de la température est relié à l'entrée d'un amplificateur 13. La sortie de l'amplificateur 13 est reliée à l'entrée d'un convertisseur analogique-numérique 14. La sortie du convertisseur analogique-numérique 14 est reliée au dispositif de contrôle 10. Pour la clarté de la figure 12, un seul inducteur 2 a été représenté. Il est bien entendu que l'on peut utiliser un nombre quelconque d'inducteurs 2, par exemple 1,2,3,4,5 ou 6 sans sortir du cadre de la présente invention.

Le dispositif de contrôle 10 fournit aux inducteurs 2, en fonction des valeurs de consigne sélectionnées sur les dispositifs de commande 9 et les mesures de température fournies par le dispositif de mesure, des courants électriques de tension, d'intensité et de fréquence nécessaires à la montée ou au maintien de la température désirée d'une casserole ou de son contenu (non représentés sur la figure 11).

Les dispositifs de commande 9 sont par exemple des boutons rotatifs ou des boutons poussoir permettant de sélectionner l'allure de cuisson, la puissance ou la température désirée. Ils peuvent avantageusement être associés à un affichage numérique ou alpha-numérique du choix sélectionné. Le dispositif 12 d'affichage de chaleur résiduelle comporte par exemple des diodes électroluminescentes (LED en terminologie anglo-saxonne) allumées tant que la température de la plaque vitrocéramique 3 est supérieure à 60°C. Le dispositif 12 comporte soit une diode unique soit une diode électroluminescente par inducteur 2.

Le dispositif selon la présente invention s'applique à la mesure de température lors du chauffage par induction.

La présente invention s'applique principalement aux mesures de température de récipients ou de leur contenu lors de la cuisson utilisant des tables de cuisson à induction.

## Revendications

1. Dispositif de mesure de la température d'un récipient (4) ou d'un produit (5) chauffé par un appareil de cuisson à induction comportant un support (3) pour le récipient et un inducteur (2) placé sous le support (3), le dispositif étant du type comportant un capteur de température (1) délivrant une mesure de la température, et un conducteur de chaleur (6) placé sous le support, en contact thermique avec le capteur de température (1), de manière à ce qu'il soit recouvert au moins partiellement par le récipient (4), caractérisé en ce que le conducteur de chaleur (6) est en contact thermique avec le support (3), est constitué d'un matériau métallique et possède une forme géométrique optimisés pour moyenner la température et pour augmenter la résistance électrique circonférentielle du conducteur de chaleur tout en minimisant la diminution de la conduction thermique radiale, la forme géométrique du conducteur de chaleur (6) consistant en une pluralité de languettes (7) rattachées à une base commune sur laquelle est disposé le capteur de température (1).

2. Dispositif de mesure de la température selon la revendication 1, caractérisé en ce que la base commune et le capteur de température sont placés au centre de l'inducteur (2).

3. Dispositif de mesure de la température selon la revendication 1, caractérisé en ce que la base commune et le capteur de température sont placés à proximité du bord de l'inducteur.

4. Dispositif de mesure de la température selon l'une quelconque des revendications 1 ou 2, caractérisé en ce que les languettes (7) s'étendent radialement autour de la base commune.

5. Dispositif de mesure de la température selon l'une quelconque des revendications 1 à 3, caractérisé en ce que les languettes (7) sont parallèles.

6. Dispositif de mesure de la température selon l'une quelconque des revendications 1 à 3, caractérisé en ce que les languettes (7) sont convergentes.

7. Dispositif de mesure de la température selon l'une quelconque des revendications 1 ou 2, caractérisé en ce que les languettes (7) sont regroupées en deux ensembles de languettes parallèles, situés de part et d'autre de la base commune.

8. Dispositif de mesure de la température selon l'une quelconque des revendications 1 à 7, caractérisé en ce que les languettes ont une largeur sensiblement égale à 2 mm.

9. Dispositif de mesure de la température selon l'une quelconque des revendications précédentes, caractérisé en ce que le conducteur de chaleur (6) est en aluminium.

10. Dispositif de mesure de la température selon l'une quelconque des revendications 1 à 8, caractérisé en ce que le conducteur de chaleur (6) est en cuivre.

11. Dispositif de mesure de la température selon l'une quelconque des revendications précédentes, caractérisé en ce que le capteur de température (1) est un capteur à coefficient de température négative (CTN).

12. Dispositif de mesure de la température selon la revendication 11, caractérisé en ce que le capteur de température est une diode.

13. Table de cuisson comportant un inducteur (2) et un dispositif de contrôle (10) contrôlant l'intensité, la tension et/ou la fréquence du courant fourni audit inducteur (2), caractérisée en ce que l'inducteur est équipé d'un dispositif de mesure de la température selon l'une quelconque des revendications précédentes.

14. Table de cuisson selon la revendication 13, caractérisée en ce que le dispositif de contrôle (10) est relié au dispositif de mesure et à un dispositif de commande (9) permettant de sélectionner une valeur de consigne, et en ce que le dispositif de contrôle asservit la température du récipient ou de son contenu à la valeur de consigne d'après les mesures de température délivrées par le dispositif de mesure.

## Patentansprüche

1. Vorrichtung zur Messung der Temperatur eines von einem Induktions-Kochgerät erwärmten Behälters (4) oder Produkts (5), wobei das Kochgerät einen Träger (3) für den Behälter und einen unter dem Träger (3) angeordneten Induktor (2) aufweist und wobei die Vorrichtung eine Temperaturmeßsonde (1), die einen Meßwert der Temperatur liefert, und einen Wärmeleiter (6) aufweist, der unter dem Träger angeordnet ist und mit der Temperaturmeßsonde (1) in Wärmekontakt steht, so daß er mindestens teilweise vom Behälter (4) bedeckt wird, dadurch gekennzeichnet, daß der Wärmeleiter (6) mit dem Träger (3) in Wärmekontakt steht, aus einem metallischen Material besteht und eine optimierte geometrische Form besitzt, um die Temperatur auf einen Mittelwert zu bringen und um den elektrischen Widerstand am Umfang des Wärmeleiters zu erhöhen und gleichzeitig die Verringerung der radialen Wärmeleitung zu minimieren, wobei die geometrische Form des Wärmeleiters (6) eine Vielzahl von Zungen (7) aufweist, die von einer gemeinsamen Basis ausgehen, auf der die Temperaturmeßsonde (1) angeordnet ist.

2. Temperatur-Meßvorrichtung nach Anspruch 1, dadurch gekennzeichnet, daß die gemeinsame Basis und die Temperaturmeßsonde sich im Zentrum des Induktors (2) befinden.

3. Temperatur-Meßvorrichtung nach Anspruch 1, dadurch gekennzeichnet, daß die gemeinsame Basis und die Temperaturmeßsonde sich in der Nähe des Rands des Induktors befinden.

4. Temperatur-Meßvorrichtung nach einem beliebigen der Ansprüche 1 oder 2, dadurch gekennzeichnet, daß die Zungen (7) sich radial um die gemeinsame Basis herum erstrecken.

5. Temperatur-Meßvorrichtung nach einem beliebigen der Ansprüche 1 bis 3, dadurch gekennzeichnet, daß die Zungen (7) parallel verlaufen.

6. Temperatur-Meßvorrichtung nach einem beliebigen der Ansprüche 1 bis 3, dadurch gekennzeichnet, daß die Zungen (7) konvergierend verlaufen.

7. Temperatur-Meßvorrichtung nach einem beliebigen der Ansprüche 1 oder 2, dadurch gekennzeichnet, daß die Zungen (7) in zwei Einheiten von parallelen Zungen gruppiert sind, die sich zu beiden Seiten der gemeinsamen Basis erstrecken.

8. Temperatur-Meßvorrichtung nach einem beliebigen der Ansprüche 1 bis 7, dadurch gekennzeichnet, daß die Breite der Zungen im wesentlichen 2 mm beträgt.

9. Temperatur-Meßvorrichtung nach einem beliebigen der vorhergehenden Ansprüche, dadurch gekennzeichnet, daß der Wärmeleiter (5) aus Aluminium ist.

10. Temperatur-Meßvorrichtung nach einem beliebigen der Ansprüche 1 bis 8, dadurch gekennzeichnet, daß der Wärmeleiter (6) aus Kupfer ist.

11. Temperatur-Meßvorrichtung nach einem beliebigen der vorhergehenden Ansprüche, dadurch gekennzeichnet, daß die Temperaturmeßsonde (1) eine Sonde mit einem negativem Temperaturkoeffizienten (CNT) ist.

12. Temperatur-Meßvorrichtung nach Anspruch 11, dadurch gekennzeichnet, daß die Temperaturmeßsonde eine Diode ist.

13. Kochfeld mit einem Induktor (2) und einer Kontrollvorrichtung (10), die die Stromstärke, die Spannung und/oder die Frequenz des dem Induktor (2) gelieferten Stroms kontrolliert, dadurch gekennzeichnet, daß der Induktor mit einer Temperatur-Meßvorrichtung gemäß einem beliebigen der vorhergehenden Ansprüche ausgestattet ist.

14. Kochfeld nach Anspruch 13, dadurch gekennzeichnet, daß die Kontrollvorrichtung (10) mit der Meßvorrichtung und einer Steuervorrichtung (9) zur Auswahl eines Sollwerts verbunden ist, und daß die Kontrollvorrichtung die Temperatur des Behälters oder seines Inhalts auf den Sollwert gemäß den von der Meßvorrichtung gelieferten Temperaturmeßwerten nachregelt.

## Claims

1. Device for measuring the temperature of a receptacle (4) or of a product (5) heated by an induction cooker including a support (3) for the receptacle and an inductor (2) placed under the support (3), the device being of the type including a temperature sensor (1) delivering a measurement of the temperature, and a heat conductor (6) placed under the support, in thermal contact with the temperature sensor (1), in such a way that it is at least partially covered by the receptacle (4), characterized in that the heat conductor (6) is in thermal contact with the support (3), is constituted by a metallic material and has a geometrical shape optimized for averaging the temperature and for increasing the circumferential electrical resistance of the heat conductor while minimizing the decrease in radial thermal conduction, the geometrical shape of the heat conductor (6) consisting of a plurality of tongues (7) attached to a common base, on which the temperature sensor (1) is arranged.

2. Device for measuring temperature according to Claim 1, characterized in that the common base and the temperature sensor are placed at the centre of the inductor (2).

3. Device for measuring temperature according to Claim 1, characterized in that the common base and the temperature sensor are placed in proximity to the edge of the inductor.

4. Device for measuring temperature according to either of Claims 1 and 2, characterized in that the tongues (7) extend radially around the common base.

5. Device for measuring temperature according to any one of Claims 1 to 3, characterized in that the tongues (7) are parallel.

6. Device for measuring temperature according to any one of Claims 1 to 3, characterized in that the tongues (7) are convergent.

7. Device for measuring temperature according to either of Claims 1 and 2, characterized in that the tongues (7) are grouped into two sets of parallel tongues, located on either side of the common base.

8. Device for measuring temperature according to any one of Claims 1 to 7, characterized in that the tongues have a width substantially equal to 2 mm.

9. Device for measuring temperature according to any one of the preceding claims, characterized in that the heat conductor (6) is made of aluminium.

10. Device for measuring temperature according to any one of Claims 1 to 8, characterized in that the heat conductor (6) is made of copper.

11. Device for measuring temperature according to any one of the preceding claims, characterized in that the temperature sensor (1) is a negative temperature coefficient (NTC) sensor.

12. Device for measuring temperature according to Claim 11, characterized in that the temperature sensor is a diode.

13. Cooking hob including an inductor (2) and a control device (10) controlling the strength, the voltage and/or the frequency of the current supplied to the said inductor (2), characterized in that the inductor is equipped with a device for measuring temperature according to any one of the preceding claims.

14. Cooking hob according to Claim 13, characterized in that the control device (10) is connected to the measuring device and to a command device (9) making it possible to select a set-point value, and in that the control device slaves the temperature of the receptacle or of its contents to the set-point value on the basis of the temperature measurements delivered by the measuring device.
